# EUROPÄISCHE PATENTSCHRIFT

(11) **EP 1 118 520 B1**
(45) Veröffentlichungstag und Bekanntmachung des Hinweises auf die Patenterteilung: **11.06.2003**
(21) Anmeldenummer: 01100266.4
(22) Anmeldetag: 03.01.2001
(51) Int. Cl.: B60T 13/66

(54) **Triebzug-Sicherheitsschleife**
Safety Loop for Motor Coach Train
Circuit de securité fermé pour automotrice

(30) Priorität: 14.01.2000 DE 10001359
(43) Veröffentlichungstag der Anmeldung: 25.07.2001
(73) Patentinhaber: SIEMENS AKTIENGESELLSCHAFT, 80333 München (DE)
(72) Erfinder: Gotthardt, Klaus-Jürgen, Dipl.-Ing., 91093 Hessdorf (DE); Mull, Peter, Dipl.-Ing. (FH), 90471 Nürnberg (DE)

(56) Entgegenhaltungen:
- DE-A- 3 505 898
- DE-A- 19 848 992
- DE-A- 19 848 994
- ROTH W: "SICHERHEITSTECHNISCHE EINRICHTUNGEN DER NEUEN DOPPELTRIEBWAGEN FUR DIE BAYERISCHE ZUGSPITZBAHN" ELEKTRISCHE BAHNEN,DE,OLDENBOURG VERLAG. MUNCHEN, Bd. 86, Nr. 8, 1. August 1988 (1988-08-01), Seiten 250-252,254-255, XP000022099 ISSN: 0013-5437

## Beschreibung

Die Erfindung betrifft eine Triebzug-Sicherheitsschleife für zur Mehrfachtraktion geeignete Triebzüge.

Bei der Kupplung mehrerer Triebzüge zu einem Triebzugverband sind die Sicherheitsschleifen zum Ansteuern der Schnellbremse (Schnellbremsschleife) so miteinander zu verbinden, daß eine zugverbandsweite Sicherheitsschleife gebildet wird, so daß eine Schnellbremsung von jedem Triebfahrzeug aus ausgelöst werden kann. Bekannt ist bisher die Auftrennung der Sicherheitsschleife an der Kupplungsseite jedes Triebfahrzeuges und das Verbinden der Schleifenenden, so daß eine durch alle Triebzüge durchgehende Schleife gebildet wird. Der schaltungstechnische Aufwand wird mittels diskret verdrahteter Schütze in Schaltschränken bzw. Gerüsten realisiert. Dabei werden auch Signale, die über Software bereitgestellt werden, mit in die Funktion der Sicherheitsschleife einbezogen, wofür ein spezieller Zulassungsnachweis erforderlich ist.

Nachteilig wirkt sich der Spannungsabfall entlang der Schleife aus, insbesondere in modernen Bordnetzen, die in jüngster Zeit oft mit 24-V-Bordnetzspannung betrieben werden. Nachteilig sind weiter mögliche Potential-verknüpfungen unterschiedlicher Bordnetzspannungen, wenn eine Einspeisung in die Sicherheitsschleife in mehreren Triebzügen erfolgt.

Der Erfindung liegt die Aufgabe zugrunde, eine Triebzug-Sicherheitssschleife anzugeben, die die angegebenen Nachteile umgeht, die einfach und robust aufgebaut ist und die keine softwaremäßige Einbindung hat.

Erfindungsgemäß wird die Aufgabe gelöst durch die Merkmale des Anspruch 1. Zweckmäßige Ausgestaltungen sind Gegenstand der Unteransprüche.

Danach erfolgt die Einkopplung gleichartiger Triebzug-Sicherheitsschleifen gekupppelter Triebzüge in die Sicherheitsschleife eines Triebzuges potentialfrei, indem jeweils die Bordnetzspannung eines ersten Triebzuges über die Triebzug-Kupplung, einen Schließerkontakt eines ersten Relais des gekuppelten zweiten Triebzuges und über die Triebzug-Kupplung zurück an ein Schleifeneingriffs-Relais des ersten Triebzuges geführt ist, bei dessen Abfallen die Sicherheitsschleife des ersten Triebzuges unterbrochen wird. Das erste Relais liegt jeweils in der Sicherheitsschleife oder im Kreis eines bei Unterbrechung der Sicherheitsschleife betätigten Schleifenrelais. Das Schleifeneingriffs-Relais ist jeweils über einen beim Kuppeln eines zweiten Triebzuges öffnenden Kontakt mit der Bordnetzspannung verbunden.

Das Schleifeneingriffs-Relais ist somit immer spannungsbeaufschlagt und kann nur durch einen Kontakt in dem jeweils gekuppelten zweiten Triebzug betätigt werden.

Die Umschaltung von direkter Spannungsversorgung des Schleifeneingriffs-Relais auf die Umgehungsschleife über den gekuppelten Triebzug erfolgt beim Kuppeln zweckmäßig durch ein zweites Relais, das über die Triebzug-Kupplung, eine Kurzschluß-Schleife des gekuppelten zweiten Triebzuges und über die Triebzug-Kupplung zurück von der Bordnetzspannung gespeist wird, so daß es beim Kuppeln schaltet.

Mit der Lösung werden einzelne, triebzeugautarke Sicherheitsschleifen geschaffen, deren Ansprechen im Triebzugverband zum Ansprechen der gesamten Sicherheitsschleifenkette führen. Die Funktion der Sicherheitsschleife wird ausschließlich mittels Sicherheitsrelais und Schützen mit zwangsgeführten Kontakten realisiert. Es werden keine Signale benötigt, die über die Software bereitgestellt werden müßten.

Die gesamte Steuerung der Sicherheitsschleife, das heißt also die Weiterleitung einer Auslösung sowie Maßnahmen beim Kuppeln und Entkuppeln eines Triebzuges, kann zweckmäßig mit Sicherheitsrelais, die auf einer Leiterplatte aufgebaut sind, realisiert werden und kann als Baugruppe in einem Gehäuse untergebracht werden, das nur wenig Platz benötigt. Jedem Führerstand ist eine Steuereinheit zugeordnet.

Die Vorteile und die Funktion der Erfindung sind auch den näheren Erläuterungen im nachstehenden Ausführungsbeispiel entnehmbar. In den zugehörigen Zeichnungen zeigen
Fig. 1 die Steuerungen zur Überleitung einer Schnellbremschleifen-Auslösung zwischen zwei Triebzügen im ungekuppelten Zustand,
Fig. 2 die Steuerungen nach Fig. 1 im gekuppelten Zustand der Triebzüge,
Fig. 3 die Überleitung einer Schnellbremsschleifen-Auslösung zu einem gekuppelten Triebzug und
Fig. 4 den Entkupplungsvorgang zweier Triebzüge.

In allen Zeichnungen sind zum besseren Verständnis die aktuell stromführenden Strompfade fett gezeichnet.

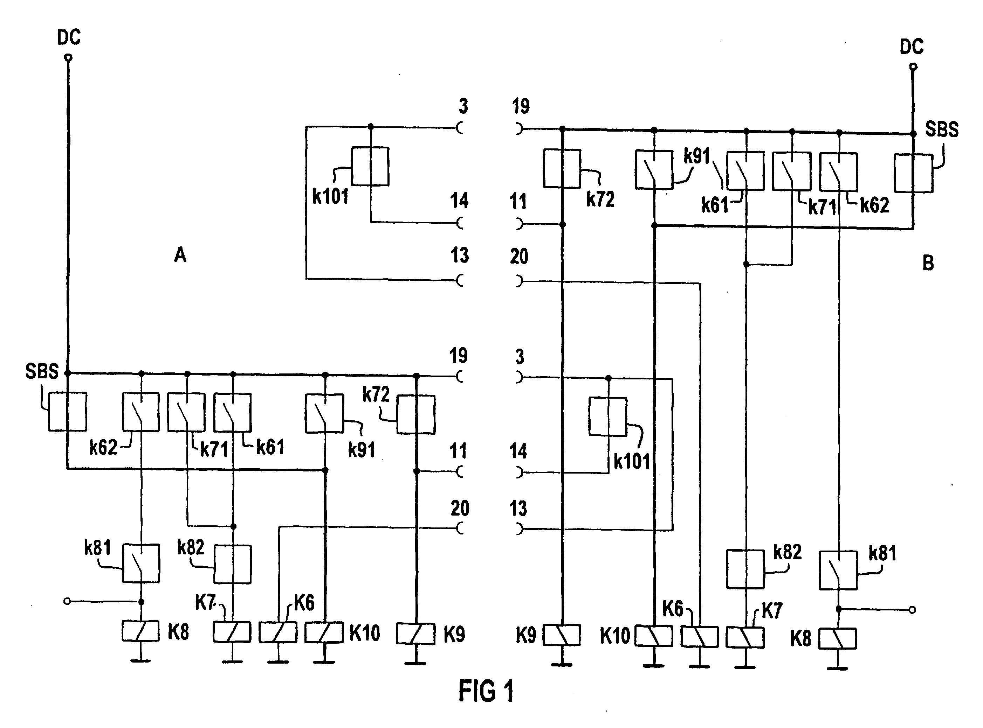

Fig. 1 zeigt den Zustand der Steuerungen zunächst im ungekuppelten Zustand der Triebzüge. Alle Triebzüge verfügen über eine Schnellbremsschleife, bei deren Unterbrechung in jedem Führerstand eines Triebzuges ein Schnellbremsschleifen-Relais öffnet. Gezeigt sind in den Figuren jeweils nur die Steuerungen in jeweils einem Führerstand A eines ersten und in einem Führerstand B eines zweiten Triebzuges. Die Steuerungen der weiteren Führerstände sowie die weiterer Triebzüge sind analog aufgebaut.

Vor einer Kupplung eines weiteren Triebfahrzeuges sind nur die Relais K9 (Schleifeneingriff) und K10 (Überleitung in eine weitere Schnellbremsschleife) stromführend. Beide Steuerungen sind damit für die Kupplung eines anderen Triebzuges vorbereitet.

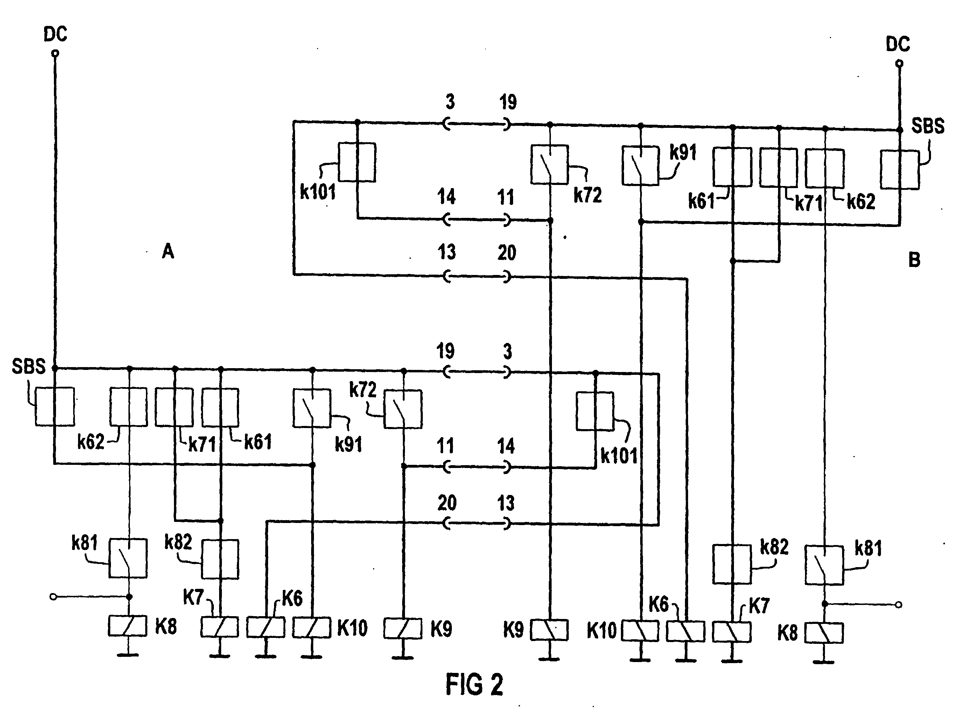

Der nachstehend beschriebene Vorgang zur Einbindung des Schnellbremschleifen-Eingriffes durch den benachbarten Triebzug läuft in beiden Führerständen A und B beiderseits einer Kuppelstelle spiegelbildlich ab. Der Vorgang läuft auch nach einer Kupplung eines weiteren Triebzuges oder beim Aufrüsten elektrisch bereits gekuppelter Triebzüge in gleicher Weise ab. Fig. 2 zeigt die Steuerungen im gekuppelten Zustand.

Die Steuerspannung DC gelangt von einem Steuerspannungs-anschluß 19 des Führerstands A über die Kupplung an einen Steuerspannungseingang 3 des Führerstandes B des zweiten Triebzuges und umgekehrt. Über Anschlüsse 13 und 20 gelangt die Steuerspannung DC an ein Relais K6 (Zweiter Triebzug elektrisch gekuppelt). Gleichzeitig wird über einen Anschluß 11 ein zunächst noch geschlossener Kontakt k72 überbrückt.

Das Relais K6 zieht an und schaltet damit ein Relais K7 (Zustand Kuppeln gespeichert) ein, das sich über einen Kontakt K71 selbst hält, um so kurze Unterbrechungen des Signals Zweiter Triebzug elektrisch gekuppelt" durch Erschütterungen z. B. der Elektrokupplung aufzufangen. Gleichzeitig öffnet der Kontakt k72. Der Strom zum Halten des Relais K9 kann aber aufgrund der Überbrückung über den Steuerspannungsanschluß 19, die Steuerung des benachbarten Triebzuges und den Anschluß 11 weiter fließen. Damit kann ein Eingriff durch den Nachbartriebzug wirksam werden.

An der Statusleitung der Schnellbremsschleife durch den Triebzug sind diverse Magnetventile der Bremsanlage sowie ein Schleifenrelais in jedem der beiden Führerstände A und B angeordnet. Dessen Status wird über einen Hilfskontakt SBS mit der Steuerspannung DC abgefragt. Die Steuerspannung DC gelangt zum Relais K10 und hält dieses angezogen.

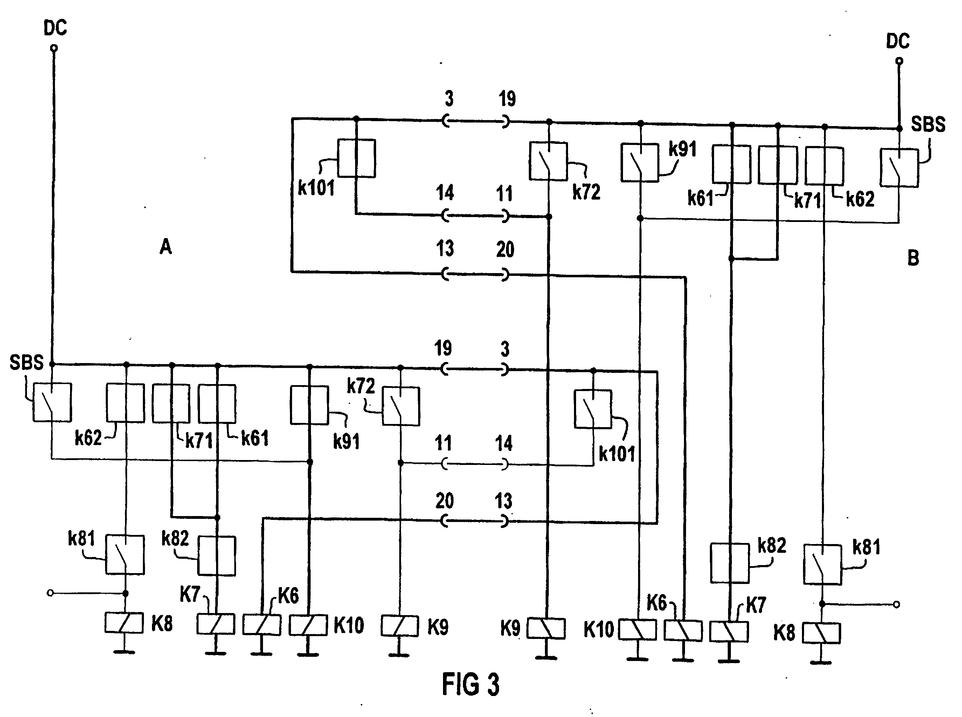

Das Relais K10 fällt bei einer Auslösung des Schleifenrelais im Führerstand B, wie in Fig. 3 dargestellt ist, ab und öffnet mit einem Kontakt k101 die Verbindung der Anschlüsse 3 und 14 und damit die Verbindung von Steuerspannungsanschluß 19 und Anschluß 11 im Führerstand A, was zum Abfallen des Relais K9 im Führerstand A führt. Da Relais K9 direkt die Schnellbremsschleife dieses Triebzuges öffnet (hier durch die Öffnung des Hilfskontaktes SBS angedeutet), kommt es auch in diesem Triebzug zur Auslösung der Schnellbremsschleife, gegebenenfalls analog in weiteren Triebzügen.

Damit diese Auslösung nun nicht via Schleifenrelais (Hilfskontakt SBS) und Relais K10 im Führerstand A zum ursprünglich auslösenden Triebzug zurückgemeldet wird, stellt ein Öffnerkontakt k91 die Spannungsversorgung für das Relais K10 sicher.

Relais K10 besitzt eine RC-Beschaltung zur Abfallverzögerung. Damit wird vermieden, daß es in der Zeit vom Wiedereinschalten des Relais K9 nach der Störungsbeseitigung bis zum Wiedereinschalten des Schleifenrelais (Hilfskontakt SBS) zu einer Fehlauslösung von Relais K10 wegen einer umschaltbedingten Spannungslücke kommt.

Die Relais K6 und K7 behalten ihre Zustände bei.

Sobald nach einer Bremsung der Hilfskontakt SBS des die Schnellbremsung auslösenden Triebzuges, hier Hilfskontakt SBS im Führerstand B, wieder geschlossen wird, kann das Relais K9 des benachbarten Triebzuges wieder einschalten, womit die Schnellbremsschleife dieses Triebzuges auch wieder geschlossen und der Zustand gemäß Fig. 2 wieder hergestellt wird.

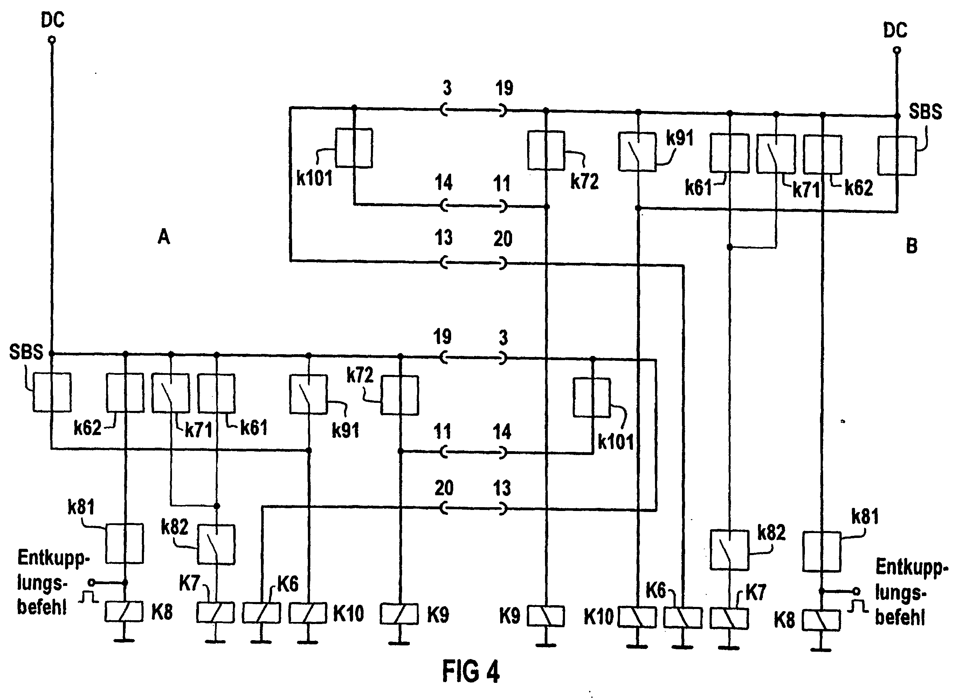

Der Entkupplungsvorgang wird anhand von Fig. 4 erläutert. Ein Entkupplungsbefehl gelangt beiderseits der Elektrokupplung jeweils über einen herausgeführten Anschluß an ein Relais K8 (Zustand Entkuppeln gespeichert). Das Relais K8 zieht an und geht mit einem Kontakt k81 in Selbsthaltung, solange das Relais K6 aktiviert ist und mit einem Kontakt k62 die Selbsthaltung ermöglicht.

Wenn das Relais K8 aktiviert wird, öffnet es mit einem Kontakt k82 die Ansteuerung des Relais K7, dessen Selbsthaltung somit unterbrochen wird und das seinerseits mit dem Kontakt k72 den Eingriff des zweiten Triebzuges wieder überbrückt und dadurch wirkungslos schaltet (gezeigter Zustand). Die automatische Bugkupplung öffnet nach einiger Zeit. Sobald sich die Bugkupplungskontakte trennen, fällt die Steuerspannung DC am Anschluß 20 weg und das Relais K6 fällt ab. Durch das Relais K6 wird der Kontakt k62 geöffnet und unterbricht die Selbsthaltung des Relais K8. Der Kontakt k61 unterbricht gleichzeitig die Spannungsversorgung des - bereits abgefallenen - Relais K7, bevor der Kontakt k82 zurückfällt. Damit ist der Zustand der Steuerung, wie er in Fig. 1 gezeigt ist, wieder erreicht. Die Auftrennung der Schnellbremsschleifen in jeweils eine fahrzeugeigene Schleife ist ohne eine Spannungsunterbrechung an einer der beteiligten Schnellbremsschleifen erfolgt.

## Patentansprüche

1. Triebzug-Sicherheitsschleife für zur Mehrfachtraktion geeignete Triebzüge,
**dadurch gekennzeichnet,**
**daß** die Einkopplung gleichartiger Triebzug-Sicherheitsschleifen gekupppelter Triebzüge in die Sicherheitsschleife eines Triebzuges potentialfrei erfolgt, indem jeweils die Bordnetzspannung (DC) eines ersten Triebzuges über die Triebzug-Kupplung, einen Schließerkontakt (k101) eines ersten Relais (K10) des gekuppelten zweiten Triebzuges und über die Triebzug-Kupplung zurück an ein Schleifeneingriffs-Relais (K9) des ersten Triebzuges geführt ist, bei dessen Abfallen die Sicherheitsschleife des ersten Triebzuges unterbrochen wird, das erste Relais (K10) jeweils in der Sicherheitsschleife oder im Kreis eines bei Unterbrechung der Sicherheitsschleife betätigten Schleifenrelais (SBS) liegt und das Schleifeneingriffs-Relais (K9) jeweils über einen beim Kuppeln eines zweiten Triebzuges öffnenden Kontakt (k72) mit der Bordnetzspannung (DC) verbunden ist.

2. Triebzug-Sicherheitsschleife nach Anspruch 1,
**dadurch gekennzeichnet,**
**daß** der beim Kuppeln eines zweiten Triebzuges öffnende Kontakt (k72) durch ein zweites Relais (K6) betätigbar ist, das von der Bordnetzspannung (DC) gespeist wird, die über die Triebzug-Kupplung, eine Kurzschluß-Schleife des gekuppelten zweiten Triebzuges und über die Triebzug-Kupplung zurück an das zweite Relais (K6) geführt ist.

3. Triebzug-Sicherheitsschleife nach Anspruch 2,
**dadurch gekennzeichnet,**
**daß** der beim Kuppeln eines zweiten Triebzuges öffnende Kontakt (k72) mittelbar durch ein von dem zweiten Relais (K6) betätigtes drittes Relais (K7) betätigbar ist.

4. Triebzug-Sicherheitsschleife nach den Ansprüchen 1 bis 3,
**dadurch gekennzeichnet,**
**daß** der beim Kuppeln eines zweiten Triebzuges öffnende Kontakt (k72) durch einen zur Entkupplung zweier gekuppelter Triebfahrzeuge führenden Schaltbefehl vor dem Entkuppeln schließbar ist.

5. Triebzug-Sicherheitsschleife nach den Ansprüchen 3 und 4,
**dadurch gekennzeichnet,**
**daß** das dritte Relais (K7) durch einen Kontakt (k82) eines vierten Relais (K8) zum Schließen des beim Kuppeln eines zweiten Triebzuges öffnenden Kontakts (k72) nach einem Schaltbefehl zum Entkuppeln zweier Triebzüge ausschaltbar ist.

## Claims

1. Safety loop for motor coach train, for motor coach trains which are suitable for multiple-unit working,
**characterized in that**
similar safety loops for motor coach trains of coupled motor coach trains are connected potential-free into the safety loop of a motor coach train, the on-board network voltage (DC) of a first motor coach train being fed back to a loop contact relay (K9) of the first motor coach train via the motor coach train coupling, a make contact (k101) of a first relay (K10) of the coupled second motor coach train and via the motor coach train coupling, when this relay opens the safety loop of the first motor coach train being interrupted, the first relay (K10) being in the safety loop or in the circuit of a loop relay (SBS) which is actuated when the safety loop is interrupted, and the loop contact relay (K9) being connected to the on-board network voltage (DC) via a contact (k72) which opens when a second motor coach train is coupled.

2. Safety loop for motor coach train according to Claim 1,
**characterized in that**
the contact (k72) which opens when a second motor coach train is coupled can be actuated by a second relay (K6), which is powered from the on-board network voltage (DC), which is fed back to the second relay (K6) via the motor coach train coupling, a short-circuit loop of the coupled second motor coach train and via the motor coach train coupling.

3. Safety loop for motor coach train according to Claim 2,
**characterized in that**
the contact (k72) which opens when a second motor coach train is coupled can be actuated indirectly by a third relay (K7) which is actuated by the second relay (K6).

4. Safety loop for motor coach train according to Claims 1 to 3,
**characterized in that**
the contact (k72) which opens when a second motor coach train is coupled can be closed before uncoupling by a switching command which results in the uncoupling of two coupled motor coach trains.

5. Safety loop for motor coach train according to Claims 3 and 4,
**characterized in that**
the third relay (K7) can be switched off after a switching command to uncouple two motor coach trains by a contact (k82) of a fourth relay (K8), to close the contact (k72) which opens when a second motor coach train is coupled.

## Revendications

1. Boucle de sécurité de train automoteur pour des trains automoteurs adaptés à la traction multiple, **caractérisée en ce que** l'attelage de trains automoteurs attelés par des boucles de sécurité de train automoteur analogues est réalisé sans potentiel dans la boucle de sécurité d'un train automoteur **en ce qu'**à chaque fois la tension de réseau de bord (DC) d'un premier train automoteur est renvoyée sur un relais pour prise de boucle (K9) du premier train automoteur par l'attelage de train automoteur, par un contact à fermeture (k101) d'un premier relais (K10) du deuxième train automoteur attelé et par l'attelage de train automoteur, la boucle de sécurité du premier train automoteur est interrompue lors de son relâchement, le premier relais (K10) se trouve à chaque fois dans la boucle de sécurité ou dans le circuit d'un relais à boucle (SBS) actionné lorsque la boucle de sécurité est interrompue et le relais pour prise de boucle (K9) est à chaque fois relié à la tension de réseau de bord (DC) par un contact (k72) qui s'ouvre lors de l'attelage d'un deuxième train automoteur.

2. Boucle de sécurité de train automoteur selon la revendication 1 **caractérisée en ce que** le contact qui s'ouvre lors de l'attelage d'un deuxième train automoteur (k72) peut être actionné par un deuxième relais (K6) qui est alimenté par la tension de réseau de bord (DC) qui est ramenée au deuxième relais (K6) par l'attelage de train automoteur, une boucle de court-circuit du deuxième train automoteur attelé et par l'attelage de train automoteur.

3. Boucle de sécurité de train automoteur selon la revendication 2 **caractérisée en ce que** le contact (k72) qui s'ouvre lors de l'attelage d'un deuxième train automoteur peut être actionné indirectement par un troisième relais (K7) actionné par le deuxième relais (K6).

4. Boucle de sécurité de train automoteur selon les revendications 1 à 3 **caractérisée en ce que** le contact (k72) qui s'ouvre lors de l'attelage d'un deuxième train automoteur peut être fermé avant le dételage par un ordre de connexion qui provoque le dételage de deux voitures automotrices attelées.

5. Boucle de sécurité de train automoteur selon les revendications 3 et 4 **caractérisée en ce que** le troisième relais (K7) peut être déconnecté par un contact (k82) d'un quatrième relais (K8) destiné à fermer le contact (k72) - qui s'ouvre lors de l'attelage d'un deuxième train automoteur - suite à un ordre de connexion destiné à dételer deux trains automoteurs.
